# EUROPÄISCHE PATENTSCHRIFT

(11) **EP 3 791 139 B1**
(45) Veröffentlichungstag und Bekanntmachung des Hinweises auf die Patenterteilung: **08.06.2022**
(21) Anmeldenummer: 19723064.2
(22) Anmeldetag: 07.05.2019
(51) Int. Cl.: G01D 11/30, G01D 5/14

(54) **MAGNET-BAUGRUPPE FÜR EINE SENSOREINRICHTUNG EINES KRAFTFAHRZEUGS, SENSOREINRICHTUNG MIT EINER MAGNET-BAUGRUPPE UND KRAFTFAHRZEUG MIT EINER SENSOREINRICHTUNG**
MAGNET ASSEMBLY FOR A SENSOR DEVICE OF A MOTOR VEHICLE, SENSOR DEVICE HAVING A MAGNET ASSEMBLY, AND MOTOR VEHICLE HAVING A SENSOR DEVICE
ENSEMBLE ÉLECTROAIMANT POUR UN DISPOSITIF CAPTEUR D'UN VÉHICULE AUTOMOBILE, DISPOSITIF CAPTEUR POURVU D'UN ENSEMBLE ÉLECTROAIMANT ET VÉHICULE AUTOMOBILE POURVU D'UN DISPOSITIF CAPTEUR

(30) Priorität: 08.05.2018 DE 102018111046
(43) Veröffentlichungstag der Anmeldung: 17.03.2021
(73) Patentinhaber: Valeo Schalter und Sensoren GmbH, 74321 Bietigheim-Bissingen (DE)
(72) Erfinder: FROEHLICH, Ekkehart, 74321 Bietigheim-Bissingen (DE); NEMERE, David, 74321 Bietigheim-Bissingen (DE)
(74) Vertreter: Pothmann, Karsten
(86) Internationale Anmeldenummer: PCT/EP2019/061605
(87) Internationale Veröffentlichungsnummer: WO 2019/215111

(56) Entgegenhaltungen:
- DE-A1-102009 039 082
- DE-A1-102012 011 876
- DE-A1-102012 024 383
- DE-A1-102013 006 567

## Beschreibung

Die Erfindung betrifft eine Magnet-Baugruppe für eine Sensoreinrichtung zum Erfassen einer einen Rotationszustand einer Lenkwelle eines Kraftfahrzeugs charakterisierenden Messgröße, wobei die Magnet-Baugruppe eine Hülse sowie ein mit der Hülse formschlüssig verbundenes Magnetelement aufweist. Die Erfindung betrifft außerdem eine Sensoreinrichtung zum Erfassen einer einen Rotationszustand einer Lenkwelle eines Kraftfahrzeugs charakterisierenden Messgröße sowie ein Kraftfahrzeug mit einer solchen Sensoreinrichtung.

Gattungsgemäße Magnet-Baugruppen werden beispielsweise in Drehmomentsensoreinrichtungen zur Erfassung eines auf eine Lenkwelle eines Kraftfahrzeugs aufgebrachten Drehmoments eingesetzt, wobei gattungsgemäße Drehmomentsensoreinrichtungen mit gattungsgemäßen Magnet-Baugruppen aus dem Stand der Technik grundsätzlich bekannt sind, beispielsweise aus der WO2016/175140 A1. Die grundsätzliche Funktionsweise einer solchen Magnet-Baugruppe ist beispielsweise in der EP 0 1 269 133 B1 beschrieben. In der US 9,810,592 B2 sind weitere Ausgestaltungsmöglichkeiten einer gattungsgemäßen Magnet-Baugruppe beschrieben.

Eine gattungsgemäße Magnet-Baugruppe ist dabei üblicherweise dazu ausgebildet, an einem von zwei, sich in axialer Richtung gegenüberliegenden Teilen der Lenkwelle befestigt zu werden, wobei zur Erfassung des Rotationszustandes der Lenkwelle auf dem anderen Wellenteil eine Sensoreinheit befestigt werden kann mit einem magnetischen Stator, welcher dazu vorgesehen ist, in radialer Richtung gegenüber von dem Magnetelement der Magnet-Baugruppe mit einem kleinen Luftspalt dazwischen angeordnet zu werden. Mithilfe des Stators kann der im Magnetelement auftretende, vom Rotationszustand der Welle abhängige magnetische Fluss zur Erzeugung eines Sensorsignals vom Magnetelement über einen Flussleiter weiter an einen Magnetsensor geleitet werden, beispielsweise an einen Hall-Sensor.

Gattungsgemäße Magnet-Baugruppen weisen üblicherweise ein als Permanentmagnet ausgebildetes, ringförmiges oder hülsenförmiges Magnetelement auf sowie in der Regel eine metallische Hülse, über welche die Magnet-Baugruppe mit der Lenkwelle verbunden werden kann, wobei bekannt ist, die Hülse beispielsweise mittels Kleben, Schweißen, Verstemmen oder mittels einer Presspassung drehfest mit der Lenkwelle zu verbinden.

Die Herausforderung besteht dabei einerseits darin, eine dauerhaft drehfeste Verbindung der Magnet-Baugruppe mit der Lenkwelle sicherzustellen, sowie andererseits eine möglichst spielfreie, drehfeste Verbindung zwischen dem Magnetelement und der Hülse bereitzustellen.

Das Magnetelement gattungsgemäßer Magnet-Baugruppen besteht dabei üblicherweise aus einem mit Magnetpartikeln gefüllten Kunststoff und wird in der Regel im Kunststoffspritzgießverfahren hergestellt, alternativ auch durch Formpressen. Zum einen ist bekannt, das Magnetelement direkt an die Hülse anzuspritzen bzw. die Hülse mit dem Magnetmaterial zu umspritzen. Zum anderen ist bekannt, die Hülse und das Magnetelement zunächst separat herzustellen und anschließend miteinander zu verbinden. Besonders häufig erfolgt dies stoffschlüssig, insbesondere durch Kleben.

Aufgrund des in der Regel hohen Füllgrads mit den magnetischen Partikeln ist der Kunststoff, der als Basismaterial für das Magnetelement dient, insbesondere bei tiefen Temperaturen, in der Regel relativ spröde bzw. wenig elastisch. Aufgrund der unterschiedlichen thermischen Ausdehnungskoeffizienten von Hülse und Magnetelement kann es daher bei im Betrieb auftretenden Temperaturschwankungen, insbesondere wenn das Magnetelement mit der Hülse verklebt ist, zu thermisch induzierten Spannungen in der Magnet-Baugruppe kommen und infolgedessen zu einer Schädigung der Klebschicht, schlimmstenfalls sogar zu einem Versagen der Klebschicht. Infolgedessen könnte sich das Magnetelement gegenüber der Hülse verdrehen oder gar vollständig lösen. Ersteres kann zu falschen, aber dennoch plausiblen Signalen führen. Im zweiten Fall kann sich in einem ungünstigen Fall der Magnetring in der Lenkung verklemmen und diese blockieren. Beide Fälle stellen ein Sicherheitsrisiko dar und müssen vermieden werden.

Zur Sicherung der Verbindung zwischen Hülse und Magnetelement, d.h. als Rückfallebene, schlägt die WO2016/175140 A1 in diesem Zusammenhang vor, Hülse und Magnetelement zusätzlich zur Klebverbindung formschlüssig zu verbinden.

Es ist eine Aufgabe der Erfindung, eine alternative Magnet-Baugruppe bereitzustellen, insbesondere eine Magnet-Baugruppe mit einer alternativen, formschlüssigen Verbindung zwischen Hülse und Magnetelement, vorzugsweise mit einer besonders einfach zu fertigenden und herzustellenden formschlüssigen Verbindung.

Diese Aufgabe wird erfindungsgemäß durch eine Magnet-Baugruppe, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren und werden im Folgenden näher erläutert.

Eine Magnet-Baugruppe gemäß der vorliegenden Erfindung für eine Sensoreinrichtung zum Erfassen einer einen Rotationszustand einer Lenkwelle eines Kraftfahrzeugs charakterisierenden Messgröße weist eine Hülse sowie ein mit der Hülse formschlüssig verbundenes Magnetelement auf.

Dabei ist die Hülse zum Verbinden der Magnet-Baugruppe mit einem ersten Teil der Lenkwelle ausgebildet, insbesondere zur drehfesten Verbindung mit der Lenkwelle, und weist wenigstens einen sich in einer Radialebene in radialer Richtung nach außen erstreckenden Anschlagflansch zur axialen Sicherung des Magnetelements in einer ersten axialen Richtung auf, wobei das Magnetelement hülsen- oder ringförmig ausgebildet ist oder ein Magnetring oder eine Magnethülse ist und eine erste Stirnseite, eine zweite Stirnseite und einen magnetisch wirksamen Magnetabschnitt dazwischen aufweist. Das Magnetelement ist konzentrisch zur Hülse angeordnet und mit seiner ersten Stirnseite zumindest teilweise, vorzugsweise vollständig, axial am Anschlagflansch abgestützt und dadurch in der ersten axialen Richtung gesichert.

Erfindungsgemäß ist das Magnetelement dabei mittels wenigstens eines, in eine in axialer Richtung geöffnete Ausnehmung mit mehreren Innenflächen eingreifenden Rastmittels in der zweiten axialen Richtung sowie in der ersten Umfangsrichtung und der zweiten Umfangsrichtung gesichert, wobei eine erste Innenfläche der Ausnehmung eine Anschlagfläche in der zweiten axialen Richtung bildet und das Rastmittel in der zweiten axialen Richtung sichert, wobei eine zweite Innenfläche der Ausnehmung eine Anschlagfläche in der ersten Umfangsrichtung bildet und das Rastmittel in der ersten Umfangsrichtung sichert und eine dritte Innenfläche der Ausnehmung eine Anschlagfläche in der zweiten Umfangsrichtung bildet und das Rastmittel in der zweiten Umfangsrichtung sichert, insbesondere jeweils formschlüssig.

In einer besonders vorteilhaften Ausgestaltung einer erfindungsgemäßen Magnet-Baugruppe erstreckt sich die erste Innenfläche bevorzugt senkrecht zur Rotationsachse der Lenkwelle, bezogen auf einen Zustand, in welchem die Magnet-Baugruppe funktionsgemäß mit einer Lenkwelle verbunden ist, während insbesondere die zweite Innenfläche und die dritte Innenfläche jeweils vorzugsweise senkrecht zur ersten Innenfläche orientiert sind, wobei sich besonders bevorzugt die zweite Innenfläche und die dritte Innenfläche einander zugewandt sind und insbesondere parallel gegenüberliegend angeordnet sind.

Hierdurch lässt sich eine besonders einfache formschlüssige Sicherung in mehrere Richtungen realisieren. Insbesondere kann auf diese Weise eine Verdrehsicherung realisiert werden, welche unabhängig von der Längentoleranz des Magnetrings bzw. der Hülse ausgestaltet werden kann, und damit besonders sicher ist. Ferner erfordert die erfindungsgemäße Sicherung keine zusätzlichen Bauteile.

"Formschlüssig" im Sinne der vorliegenden Erfindung bedeutet dabei "durch die geometrische Form der miteinander in Wirkverbindung stehenden, insbesondere miteinander im Eingriff befindlichen, Verbindungsteile" bedingt.

Die Richtungsangabe "axial" bezeichnet vorliegend jeweils in fachüblicher Weise eine Richtung parallel zur Rotations- bzw. Drehachse der Lenkwelle, bezogen auf einen Zustand, in welchem die Hülse der Magnet-Baugruppe verwendungsgemäß drehfest mit einem ersten Teil der Lenkwelle verbunden ist. Die Richtungsangabe "Umfangsrichtung" bezeichnet entsprechend eine Rotationsrichtung um diese Rotationsachse und die Richtungsangabe "radial" eine Richtung, die senkrecht auf der axialen Richtung und der Umfangsrichtung steht. Die Richtungsangabe "tangential" bezieht sich entsprechend auf eine Richtung, welche senkrecht auf der axialen Richtung und der radialen Richtung steht.

Unter dem Begriff "Sichern" wird im Sinne der vorliegenden Erfindung das Festlegen des jeweiligen Bauteils, insbesondere das Fixieren des Bauteils in der jeweils in dem zugehörigen Zusammenhang angegebenen Richtung in der Weise verstanden, dass das jeweilige Bauteil derart an einer Bewegung/Verlagerung in der jeweiligen Richtung gehindert wird, dass eine erforderliche Signalqualität eines mit der Magnet-Baugruppe erzeugten Sensorsignals gewährleistet ist und eine Funktionssicherheit von Funktionen, welches dieses Sensorsignal verwenden nicht beeinträchtigt ist.

Zur Verbindung mit der Welle weist die Hülse bevorzugt einen buchsenförmigen Befestigungsabschnitt auf, wobei dieser vorzugsweise an einen buchsenförmigen Verbindungsabschnitt angrenzt, in dessen Bereich insbesondere das Magnetelement angeordnet ist und zumindest teilweise mit der Hülse verbunden ist.

In einer vorteilhaften Ausgestaltung einer erfindungsgemäßen Magnet-Baugruppe weist der Befestigungsabschnitt dabei einen kleineren Durchmesser auf als der Verbindungsabschnitt, d.h. die Hülse ist vorzugsweise "gekröpft". Die Hülse kann aber auch einfach zylindrisch ausgebildet sein.

In einer besonders vorteilhaften Ausgestaltung einer erfindungsgemäßen Magnet-Baugruppe weist die Magnet-Baugruppe insbesondere mehrere in Umfangsrichtung verteilt angeordnete Rastmittel auf, insbesondere in Umfangsrichtung gleichmäßig verteilt angeordnete Rastmittel, die in entsprechende, zugehörige und ebenfalls in Umfangsrichtung verteilt angeordnete, insbesondere ebenfalls gleichmäßig verteilt angeordnete Ausnehmungen eingreifen, vorzugsweise jeweils 3, 4, 5 oder 6. Hierdurch kann eine besonders gleichmäßige Verteilung der auftretenden Kräfte und Momente erreicht werden und infolge dessen eine besonders gleichmäßige Spannungsverteilung innerhalb der Magnet-Baugruppe, wodurch die Gefahr von Überbeanspruchungen einzelner Teile, insbesondere von der Klebschicht und/oder dem Magnetelement selbst, reduziert werden kann.

In einigen Fällen ist es vorteilhaft, wenn nur ein erfindungsgemäßes Rastmittel sowie eine zugehörige Ausnehmung vorgesehen ist, in welche das eine Rastmittel eingreift, und wenn darüber hinaus weitere Ausnehmungen vorgesehen sind, in die jedoch kein Rastmittel eingreift. Diese Ausnehmungen können beispielsweise als Montagehilfe, insbesondere zur Winkelausrichtung des Magnetelements relativ zur Hülse, genutzt werden. Insbesondere ergeben sich dadurch weitere Montagepositionen, wodurch die Montage vereinfacht wird.

Die Hülse einer erfindungsgemäßen Magnet-Baugruppe enthält vorzugsweise Metall und/oder ist aus Metall hergestellt, wobei die Hülse vorzugsweise zumindest teilweise durch Tiefziehen hergestellt ist. Vorzugsweise ist die Hülse derart ausgebildet, dass sie mittels einer Presspassung auf einem Teil der Lenkwelle befestigt werden kann oder mit dem Teil der Lenkwelle verstemmt, vercrimpt oder verklebt werden. Alternativ kann die Hülse auch mit dem vorgesehenen Teil der Lenkwelle verschweißt oder mittels einer Presspassung verbunden werden.

Das Umformen von Kunststoff-Verbindungselementen mittels Verstemmen, insbesondere Heißverstemmen oder Ultraschallverstemmen ist aus dem Stand der Technik allgemein bekannt, so dass an dieser Stelle auf weitere Ausführungen diesbezüglich verzichtet wird.

Der Magnetabschnitt des Magnetelementes ist vorzugsweise ebenfalls hülsen- oder ringförmig ausgebildet, insbesondere in Umfangsrichtung geschlossen, oder derart ausgebildet, dass er ähnlich wie ein hülsen- oder ringförmig ausgebildeter Magnetabschnitt bzw. wie ein üblicher, aus dem Stand der Technik bekannter Ringmagnet wirkt, wobei der Magnetabschnitt bevorzugt konzentrisch zur Hülse angeordnet ist, wobei ein Innendurchmesser des Magnetelements insbesondere größer aus ein Außendurchmesser der Hülse ist, und wobei das Magnetelement insbesondere radial außen um die Hülse herum angeordnet ist.
D.h. bevorzugt erstreckt sich das Magnetelement in Umfangsrichtung außen um die Hülse herum und über einen Teil der Länge der Hülse in axialer Richtung, wobei das Magnetelement sich insbesondere in einem Bereich eines buchsenförmigen Verbindungsabschnitts um die Hülse herum erstreckt.

Das Magnetelement der erfindungsgemäßen Magnet-Baugruppe kann vorzugsweise mittels eines Spritzguss- oder eines Formpressverfahrens hergestellt werden. Andere übliche Herstellungsverfahren sind ebenfalls denkbar.

Das Magnetelement einer erfindungsgemäßen Magnet-Baugruppe enthält bevorzugt ein mit magnetischen Partikeln gefüllten Kunststoff und/oder besteht daraus, wobei das Magnetelement vorzugsweise in einem Kunststoffspritzgießverfahren hergestellt ist. Besonders bevorzugt ist das Magnetelement mit der Hülse verklebt oder kann durch Kleben mit der Hülse stoffschlüssig verbunden worden.

In einer vorteilhaften Ausgestaltung einer erfindungsgemäßen Magnet-Baugruppe ist der Anschlagflansch insbesondere vollständig umlaufend ausgebildet, d.h. in einer vorteilhaften Ausgestaltung weist der Anschlagflansch keine Ausnehmung in Umfangsrichtung auf.

Ein Anschlagflansch ohne Ausnehmungen in Umfangsrichtung ist grundsätzlich steifer als ein vergleichbar ausgebildeter Anschlagflansch mit Ausnehmungen, Aussparungen, Schlitzen oder dergleichen. Durch die verbesserte Steifigkeit lassen sich ohne fertigungstechnischen Mehraufwand geringere Toleranzen von Durchmesser und Rundheit erreichen. Ferner kann mit einem vollständig umlaufend ausgebildeten Flansch ein stabilerer Anschlag realisiert werden und infolgedessen eine besonders gute und gleichmäßige und insbesondere genaue Positionierung und Sicherung der Position des Magnetelements in der ersten axialen Richtung erreicht werden.

Das Magnetelement kann dabei direkt oder indirekt am Anschlagflansch anliegen und/oder abgestützt sein, d.h. mit oder ohne ein oder mehrere weitere Bauteile in axialer Richtung dazwischen, wobei das Magnetelement mit seiner kompletten ersten Stirnseite am Anschlagelement anliegen kann, d.h. vollflächig, oder nur mit einem Teil der Stirnseite, was beispielsweise durch entsprechende Vorsprünge am Magnetelement und/oder dem Anschlagflansch erreicht werden kann.

In einer weiteren vorteilhaften Ausgestaltung einer erfindungsgemäßen Magnet-Baugruppe ist der Anschlagflansch vorzugsweise an einem ersten Ende der Hülse angeordnet oder bildet insbesondere das erste Ende der Hülse.

In einer weiteren vorteilhaften Ausgestaltung einer erfindungsgemäßen Magnet-Baugruppe ist die wenigstens eine Ausnehmung eine an der zweiten Stirnseite des Magnetelements angeordnete und sich ausgehend von einer Stirnfläche der zweiten Stirnseite in Richtung der ersten Stirnseite in axialer Richtung und in Umfangsrichtung erstreckende, in das Magnetelement eingebrachte Vertiefung oder Aussparung, insbesondere eine sich in radialer Richtung über die gesamte Dicke des Magnetelements in das Magnetelement erstreckende Aussparung.

Mit einer derartigen Ausnehmung kann auf besonders einfache Art und Weise gleichzeitig sowohl eine Sicherung des Magnetelements relativ zur Hülse in der zweiten axialen Richtung und in der ersten und zweiten Umfangsrichtung erreicht werden. Dies hat gegenüber getrennten Sicherungsausnehmungen und zugehörigen separaten Sicherungs-Rastmitteln, die jeweils nur in eine Richtung wirken, den Vorteil, dass ein geringerer Fertigungsaufwand anfällt. Ferner ergibt sich eine vereinfachte Montage, da weniger Sicherungsverbindungen hergestellt werden müssen. Infolgedessen ergibt sich ein Kosteneinsparungspotenzial.

Die wenigstens eine Ausnehmung ist dabei insbesondere eine in der zweiten axialen Richtung geöffnete, d.h. zur zweiten Stirnseite hin geöffnete, U-förmig oder U-ähnlich ausgebildete Aussparung, welche sich in radialer Richtung insbesondere über die gesamte Dicke des Magnetelements in diesem Bereich erstreckt und insbesondere ähnlich eines sich in Umfangsrichtung und in axialer Richtung erstreckenden Schlitzes ausgebildet ist.

Bevorzugt bilden dabei insbesondere die inneren, sich zumindest teilweise in axialer Richtung und vorzugsweise senkrecht zur Umfangsrichtung erstreckenden Seitenflächen der Ausnehmung, insbesondere die entsprechenden Innenflächen des "U" einer U-förmigen oder U-ähnlichen Ausnehmung, die in Umfangsrichtung wirkenden Anschlagflächen und der Boden der Ausnehmung bevorzugt die axiale Anschlagfläche, an welcher das Rastmittel, insbesondere das freie Ende des Rastmittels zumindest teilweise, vorzugsweise spielfrei, anliegt.

Eine derartige Ausnehmung, welche insbesondere durch entsprechenden Materialabtrag in das Magnetelement eingebracht werden kann, ist einfach herzustellen und ermöglicht die Ausbildung einer besonders einfach herzustellenden und ausreichend sicheren, aber dennoch einfach genug zu lösenden formschlüssigen Verbindung. Ferner muss das zugehörige Rastmittel keine komplizierte Geometrie aufweisen, um sicher in die Ausnehmung einzugreifen, ein einfaches, freies Ende einer Lasche, beispielsweise in Rechteckform, reicht. Alternativ kann die Ausnehmung aber auch bereits bei der Herstellung des Magnetelementes eingebracht werden, insbesondere mithilfe einer entsprechenden Werkzeuggeometrie, beispielsweise des Spritzgießwerkzeugs, das zur Herstellung des Magnetelements verwendet wird, vorzugsweise bereits formfallend.

In einer alternativen, aber ebenfalls vorteilhaften Ausgestaltung einer erfindungsgemäßen Magnet-Baugruppe ist die wenigstens eine Ausnehmung insbesondere durch einen Stirnflächenabschnitt der zweiten Stirnseite des Magnetelements und durch zwei jeweils in Umfangsrichtung außen an diesen Stirnflächenabschnitt angrenzende und sich jeweils in axialer Richtung weg von der Stirnfläche an der zweiten Stirnseite erstreckende Vorsprünge des Magnetelements gebildet. Dabei bilden vorzugsweise die in Umfangsrichtung einander zugewandten Seitenflächen der beiden Vorsprünge des Magnetelementes die in Umfangsrichtung wirkenden Anschlagflächen und der in Umfangsrichtung zwischen den beiden Vorsprüngen angeordnete Stirnflächenabschnitt des Magnetelementes insbesondere die in axialer Richtung wirkende Anschlagfläche.

Diese Art der Ausgestaltung hat den Vorteil, dass die Ausnehmung bereits bei der Herstellung des Magnetelements beispielsweise durch Anspritzen der Vorsprünge ausgebildet werden kann, insbesondere formfallend.

In einer weiteren vorteilhaften Ausgestaltung einer erfindungsgemäßen Magnet-Baugruppe ist die wenigstens eine Ausnehmung insbesondere durch eine an der zweiten Stirnseite des Magnetelements, ausgehend von einer Stirnfläche der zweiten Stirnseite in Richtung der ersten Stirnseite in axialer Richtung und Umfangsrichtung in das Magnetelement eingebrachte Vertiefung oder Aussparung sowie durch zwei jeweils in Umfangsrichtung außen an die Vertiefung oder Aussparung angrenzende und sich jeweils in axialer Richtung weg von der zweiten Stirnseite erstreckende Vorsprünge des Magnetelements gebildet.

Bevorzugt bilden dabei insbesondere die in Umfangsrichtung einander zugewandten Seitenflächen der beiden Vorsprünge des Magnetelementes zusammen mit den inneren, sich zumindest teilweise in axialer Richtung und vorzugsweise senkrecht zur Umfangsrichtung erstreckenden Innenflächen der Vertiefung oder Aussparung, die in Umfangsrichtung wirkenden Anschlagflächen, und der Boden der Vertiefung oder Aussparung insbesondere die axiale Anschlagfläche.

Hierdurch lässt sich auf einfache Art und Weise eine ausreichende Tiefe in axialer Richtung und ein ausreichender Überstand in radialer Richtung erreichen und damit eine gute, sichere formschlüssige Verbindung realisieren.

In einer weiteren vorteilhaften Ausgestaltung einer erfindungsgemäßen Magnet-Baugruppe weist das Rastmittel insbesondere einen sich zumindest teilweise, insbesondere im Wesentlichen, in axialer Richtung erstreckenden Rastarm mit einem freien Ende auf oder ist durch einen solchen Rastarm gebildet, wobei der Rastarm mit seinem freien Ende in die zugehörige Ausnehmung eingreift und dadurch das Magnetelement in der zweiten axialen Richtung sowie in der ersten Umfangsrichtung und der zweiten Umfangsrichtung jeweils sichert.

Mit einem derartigen Rastmittel lässt sich auf besonders einfache Art und Weise eine formschlüssige Sicherung des Magnetelements gegenüber der Hülse erreichen in wenigstens zwei Umfangsrichtungen und einer axialen Richtung.

Bevorzugt liegt das freie Ende des Rastarms dabei an wenigstens einer Anschlagfläche in der Ausnehmung an, insbesondere wenigstens an der in axialer Richtung wirkenden Anschlagfläche, wobei das freie Ende des Rastarms besonders bevorzugt an der in axialer Richtung wirkenden Anschlagfläche und an einer oder an beiden der in Umfangsrichtung wirkenden Anschlagflächen anliegt.

Besonders bevorzugt sind das Rastmittel und die Ausnehmung dabei insbesondere derart zueinander bemessen und die zugehörigen Toleranzen derart gewählt, dass zumindest in wenigstens einem definierten Betriebsbereich eine für die fehlerfreie Funktion der Magnetbaugruppe, d.h. für die Erzeugung eines Sensorsignals mit einer definierten Signalqualität, erforderliche formschlüssige Fixierung des Magnetelements in beiden axialen Richtungen und beiden Umfangsrichtungen gegenüber der Hülse sichergestellt ist. Insbesondere sind das Rastmittel und die Ausnehmung derart zueinander bemessen, dass ein maximal zulässiges Spiel in axialer und/oder Umfangsrichtung nicht überschritten wird und eine ausreichende Drehfestigkeit der formschlüssigen Verbindung zwischen dem Magnetelement und der Hülse erreicht wird. Besonders bevorzugt sind das Rastmittel und die Ausnehmung derart zueinander bemessen, dass sich in axialer Richtung wenigstens eine Übergangspassung einstellt, insbesondere eine Übermaßpassung, so dass stets wenigstens in axialer Richtung eine spielfreie Verbindung erreicht wird.

In einer weiteren vorteilhaften Ausgestaltung einer erfindungsgemäßen Magnet-Baugruppe ist das Rastmittel mit der Hülse verbunden, wobei das Rastmittel insbesondere integral mit der Hülse ausgebildet ist oder mit der Hülse ein gemeinsames Bauteil bildet.

Durch eine derartige Ausgestaltung ist kein zusätzliches Bauteil erforderlich und damit kein zusätzliches Gewicht. Ferner lässt sich das Rastmittel auf diese Weise einfach herstellen.

In einer weiteren vorteilhaften Ausgestaltung einer erfindungsgemäßen Magnet-Baugruppe ist das Rastmittel insbesondere ein an der Hülse befestigter oder integral oder einteilig mit der Hülse ausgebildeter Rastarm mit einem freien Ende, der sich im Wesentlichen in axialer Richtung und zumindest teilweise in radialer Richtung nach außen und mit seinem freien Ende in Richtung der zweiten Stirnseite des Magnetelementes erstreckt.

In einer weiteren vorteilhaften Ausgestaltung einer erfindungsgemäßen Magnet-Baugruppe weist die Hülse Metall auf oder besteht daraus und der Rastarm ist durch teilweises Heraustrennen einer Lasche, insbesondere durch teilweises Ausstanzen einer Lasche aus der Hülse, insbesondere im Bereich des Befestigungsabschnitts, und durch anschließendes Umformen der Lasche, insbesondere durch Biegen der Lasche, hergestellt, wobei der Rastarm insbesondere durch wenigstens zweifaches Biegen, vorzugsweise wenigstens durch zweifaches, wechselseitiges Biegen, insbesondere durch wenigstens zweifaches, wechselseitiges Abkanten der Lasche um etwa 90° hergestellt und geformt ist.

In einem formschlüssig verbunden Zustand des Magnetelements mit der Hülse liegt besonders bevorzugt eine Stirnfläche des freien Endes der Lasche in axialer Richtung an der in axialer Richtung wirkenden Anschlagfläche der Ausnehmung an, um das Magnetelement in der zweiten axialen Richtung auf der Hülse zu sichern, insbesondere gegen eine Verlagerung in der zweiten axialen Richtung und insbesondere, um zusammen mit dem Anschlagflansch das Magnetelement in axialer Richtung auf der Hülse zu fixieren.

Durch das Biegen der Lasche, insbesondere durch das doppelte Biegen, können Toleranzen ausgeglichen werden und insbesondere kann, bei entsprechender Ausgestaltung, eine spielfreie Anlage in der Ausnehmung, insbesondere in axialer Richtung, eingestellt werden.

In einer weiteren vorteilhaften Ausgestaltung einer erfindungsgemäßen Magnet-Baugruppe weist das Magnetelement außerdem an seiner inneren Mantelfläche bevorzugt mehrere, insbesondere in Umfangsrichtung verteilt und beabstandet zueinander angeordnete und jeweils in axialer Richtung verlaufende Rippen auf, wobei die Rippen sich bevorzugt über die gesamte Länge des Magnetelements in axialer Richtung erstrecken.

Hierdurch lässt sich auf besonders einfache Art und Weise eine gute Zentrierung und/oder koaxiale Anordnung zur Hülse erreichen und damit auf einfache Art und Weise eine exakte Positionierung und Ausrichtung des Magnetelementes, welche für die Sensorsignalqualität von wesentlicher Bedeutung ist.

Eine erfindungsgemäße Sensoreinrichtung zum Erfassen einer einen Rotationszustand einer Lenkwelle eines Kraftfahrzeugs charakterisierenden Messgröße weist eine erfindungsgemäße Magnet-Baugruppe auf.

Ein erfindungsgemäßes Kraftfahrzeug mit einer Sensoreinrichtung weist eine erfindungsgemäße Sensoreinrichtung mit einer erfindungsgemäßen Magnet-Baugruppe auf.

Die mit Bezug auf die Magnet-Baugruppe vorgestellten vorteilhaften Ausgestaltungen und deren Vorteile gelten entsprechend auch für eine erfindungsgemäße Sensoreinrichtung sowie für ein erfindungsgemäßes Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, sofern sie technisch sinnvoll sind.

Die Erfindung wird nun anhand mehrerer, vorteilhafter Ausführungsbeispiele unter Bezugnahme auf die beigefügten Zeichnungen näher erläutert.

Es zeigen:
- Fig. 1: ein erstes Ausführungsbeispiel einer erfindungsgemäßen Magnet-Baugruppe in perspektivischer Darstellung,
- Fig. 2: ein zweites Ausführungsbeispiel einer erfindungsgemäßen Magnet-Baugruppe in perspektivischer Darstellung,
- Fig. 3: ein drittes Ausführungsbeispiel einer erfindungsgemäßen Magnet-Baugruppe in perspektivischer Darstellung,
- Fig. 4: die Hülse der erfindungsgemäßen Magnet-Baugruppen aus den Fig. 1 bis 4 als Einzelteil in perspektivischer Darstellung,
- Fig. 5: das Magnetelement der erfindungsgemäßen Magnet-Baugruppe aus Fig. 3 als Einzelteil in einer ersten perspektivischen Darstellung von schräg unten und
- Fig. 6: das Magnetelement der erfindungsgemäßen Magnet-Baugruppe aus Fig. 3 und 5 in einer zweiten perspektivischen Darstellung von schräg oben.

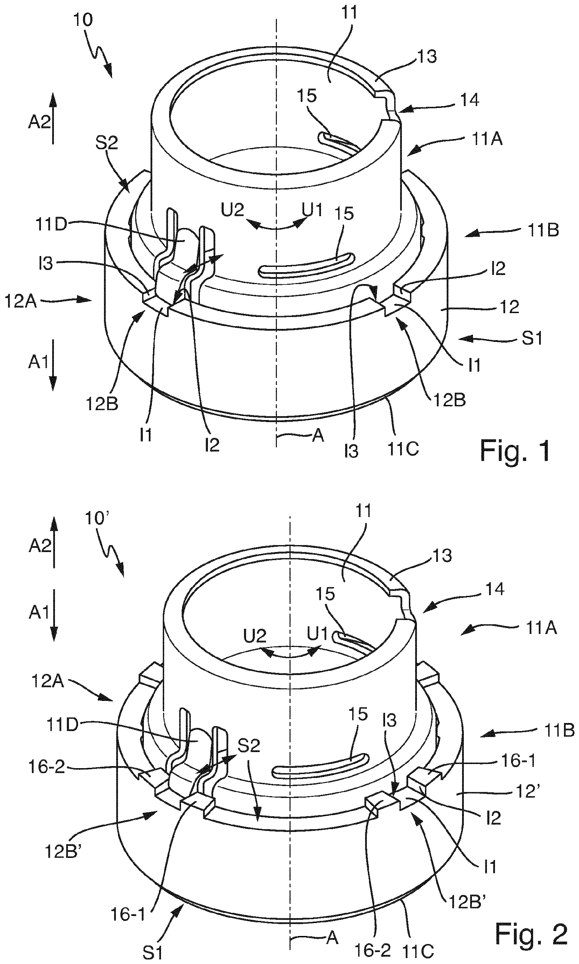

**Fig.** 1 zeigt ein erstes Ausführungsbeispiel einer erfindungsgemäßen Magnet-Baugruppe 10 mit einer metallischen Hülse 11 und einem Magnetelement 12 aus mit magnetischen Partikeln gefülltem Kunststoff, wobei die Hülse 11 einen buchsenförmigen Befestigungsabschnitt 11A zum Befestigen der Magnet-Baugruppe auf einem ersten Teil einer, um eine Rotationsachse A drehbaren, hier nicht dargestellten Lenkwelle aufweist sowie einen ebenfalls buchsenförmigen Verbindungsabschnitt 11B zum Verbinden der Hülse 11 mit dem Magnetelement 12, wobei die Hülse 11 gekröpft ausgebildet ist und im Bereich des Verbindungsabschnitts 11B einen größeren Durchmesser aufweist, als im Bereich des Befestigungsabschnitts 11A. Durch den größeren Außendurchmesser des Verbindungsabschnitts 11B können eventuelle, beim Befestigen der Hülse 11 auf einer Lenkwelle entstehende Effekte, insbesondere Verspannungen odgl., auf einfache Art und Weise zumindest deutlich, insbesondere weitestgehend, vom Magnetelement 12 entkoppelt werden.

Das Magnetelement 12 der erfindungsgemäßen Magnet-Baugruppe 10 weist einen magnetisch wirksamen Magnetabschnitt 12A auf, der ebenfalls buchsen- bzw. hülsenförmig ausgebildet ist, wobei das Magnetelement 12 zum einen stoffschlüssig mit der Hülse 11 verbunden ist, nämlich durch eine Verklebung im Bereich des Verbindungsabschnitts 11B bzw. des wirksamen Magnetabschnitts 12A, sowie zur Sicherheit ferner zusätzlich formschlüssig, insbesondere in radialer Richtung, in axialer Richtung A1, A2 und in Umfangsrichtung U1, U2, um auch bei Versagen der Klebverbindung weiterhin eine sichere Positionierung der Bauteile 11, 12 zueinander gewährleisten zu können, was unter anderem Voraussetzung für ein sicheres und damit verwertbares Sensorsignal ist.

Die formschlüssige Verbindung zwischen Magnetelement 12 und Hülse 11 in radialer Richtung (bezogen auf die Rotationsachse A der hier nicht dargestellten Lenkwelle) ergibt sich dabei durch die konzentrische Anordnung des Magnetelements 12 außen um die Hülse 11 im Bereich des Verbindungsabschnitts 11B herum.

Die formschlüssige Verbindung zwischen Magnetelement 12 und Hülse 11 in axialer Richtung wird in eine erste axiale Richtung A1 durch einen sich in radialer Richtung nach außen in einer Radialebene senkrecht zur Rotationsachse A erstreckenden Anschlagflansch 11C erreicht, an welchem das Magnetelement 12 mit seiner ersten Stirnseite S1 in axialer Richtung anliegt und welcher das Magnetelement 12 in seiner Position gegen ein Verschieben relativ zur Hülse 11 in der ersten axialen Richtung A1 sichert.

Die Sicherung des Magnetelements 12 in einer zweiten, entgegengesetzten axialen Richtung A2 erfolgt mittels eines integral mit der Hülse 11 ausgebildeten Rastmittels 11D in Form eines sich im Wesentlichen in axialer Richtung A1, A2 und auch radial nach außen erstreckenden Rastarms 11D mit einem freien Ende, der in eine entsprechend ausgebildete, U-förmige Ausnehmung 12B mit einer vom Anschlagflansch 11C wegzeigenden, ins Magnetelement 12 eingebrachten Aussparung 12B eingreift und mit seiner Stirnseite seines freien Endes im Bereich einer zweiten Stirnseite S2 des Magnetelements 12 an einer sich senkrecht zur Axialrichtung A1, A2 erstreckenden ersten Innenfläche I1, welche der Bodenfläche der Ausnehmung 12B entspricht, anliegt und somit eine Axialverschiebung in die zweite axiale Richtung A2 blockiert, so dass das Magnetelement im Ergebnis in beide axiale Richtungen A1 und A2 festgelegt ist und damit vollständig in axialer Richtung festgelegt ist.

Die Sicherung in Umfangsrichtung U1, U2, insbesondere in einer ersten Umfangsrichtung U1 sowie in einer zweiten, entgegengesetzten Umfangsrichtung U2 erfolgt ebenfalls mittels des in die als Aussparung 12B ausgebildete Ausnehmung 12B eingreifenden Rastarms 11D, wobei in diesem Fall eine zweite Innenfläche I2 der U-förmigen Aussparung 12B die wirksame Anschlagfläche in der ersten Umfangsrichtung U1 bildet und eine dritte Innenfläche I3 die wirksame Anschlagfläche in der zweiten Umfangsrichtung U2.

Durch die kombinierte, sowohl in der zweiten axialen Richtung A2 als auch in beide Umfangsrichtungen U1, U2 wirkende formschlüssige Verbindung im Bereich der zweiten Stirnseite S2 des Magnetelements 12 kann in Verbindung mit einem einfach herzustellenden Anschlagflansch 11C auf besonders einfache und kompakte Art und Weise eine Sicherung der Klebverbindung zwischen Magnetelement 12 und Hülse 11 als Rückfallebene erreicht werden, welche außerdem besonders montagefreundlich ist.

Wie anhand von Fig. 1 gut zu erkennen ist, ist bei diesem Ausführungsbeispiel nur eine einzige formschlüssige Verbindung im Bereich der zweiten Stirnseite S2 zwischen Magnetelement 12 und Hülse 11 ausgebildet, obwohl das Magnetelement 12 insgesamt vier entsprechende Ausnehmungen 12B aufweist. Dies hat den Hintergrund, dass in diesem Fall bereits mit einer einzigen formschlüssigen Verbindung die erforderliche Verbindungssicherheit erreicht werden kann. Somit kann auf die anderen formschlüssigen Verbindungen verzichtet werden. Insbesondere braucht nur jeweils eine Lasche in die Hülse eingebracht zu werden bzw. nur ein Rastarm 11D ausgeformt zu werden.

Die übrigen drei, nicht genutzten Ausnehmungen 12B könnten auch entfallen, vereinfachen jedoch die Montage, da mehr auswählbare Möglichkeiten zur Herstellung der jeweiligen formschlüssigen Verbindung von Rastmittel 11D und Ausnehmung 12B zur Verfügung stehen und somit eine schnellere Positionierung von Magnetelement 12 und Hülse 11 erreicht werden kann.

Alternativ können aber auch mehr als eine der vorbeschriebenen formschlüssigen Verbindungen, vorzugsweise 2, 3, 4 oder mehr, insbesondere bis zu 6, formschlüssige Verbindungen im Bereich der zweiten Stirnseite vorgesehen sein, wobei im Falle von mehreren, diese bevorzugt in Umfangsrichtung U1, U2 gleichmäßig verteilt angeordnet sind.

Zur Herstellung der beschriebenen, erfindungsgemäßen Magnet-Baugruppe 10 sind zunächst die Hülse 11 sowie das Magnetelement 12 jeweils separat hergestellt worden und dann zu einer Magnet-Baugruppe 10 zusammengefügt worden.

Die U-förmige Ausnehmung 12B ist dabei von der zweiten Stirnseite S1 in axialer Richtung in das Magnetelement 12 eingebracht, insbesondere bereits bei der Herstellung des Magnetelements 12 eingeformt worden und schließt in diesem Fall bündig mit der an die in Umfangsrichtung U1, U2 an die Ausnehmung 12B angrenzende Stirnfläche an der zweiten Stirnseite S2 ab.

Der Rastarm 11D ist durch teilweises Ausstanzen aus der Hülse und zweifaches, wechselseitiges Abkanten geformt worden, wobei der Rastarm 11D leicht nachgiebig ist in radialer Richtung (angedeutet durch den Doppelpfeil sowie die zwei angedeuteten Positionen), so dass er zum Aufschieben des Magnetelements 12 auf die Hülse für den Zusammenbau der Magnet-Baugruppe 10 bzw. zum Lösen der formschlüssigen Verbindung im Bereich der zweiten Stirnseite S2 in radialer Richtung nach innen gedrückt werden kann und zum Fixieren des Magnetelements 12 nach außen, um in die Ausnehmung 12B sichernd einzugreifen und insbesondere in der Ausnehmung 12B einzurasten.

Zum Zusammenbau der Magnet-Baugruppe 10 ist das Magnetelement 12, bezogen auf die Darstellung in Fig. 1 von oben auf die Hülse 11 aufgeschoben worden, bis zur Anlage der ersten Stirnseite S1 am Anschlagflansch 11C, wobei zwischen Magnetelement 12 und Hülse 11 im Bereich des Verbindungsabschnitts 11B zuvor Klebstoff aufgetragen worden ist zur Herstellung der Klebverbindung zwischen Hülse 11 und Magnetelement 12. Liegt das Magnetelement 12 am Anschlagflansch 11C an, kann der Rastarm 11D in die Ausnehmung 12B eingebracht werden und insbesondere in der Ausnehmung 12B verklemmt oder verrastet werden.

Falls erforderlich, insbesondere um ein Rückfedern des Rastmittels 11D zu verhindern, kann in der Ausnehmung 12B, insbesondere an einer oder mehreren Innenflächen I1, I2 und/oder I3 auch zusätzlich wenigstens eine Rastnase, eine Rastkante oder ein Rastvorsprung vorgesehen sein, welchen das Rastmittel 11D insbesondere mit seinem freien Ende hintergreifen kann für eine verbesserte formschlüssige Verbindung oder zur Herstellung einer Rastverbindung.

**Fig.** 2 zeigt ein zweites Ausführungsbeispiel einer erfindungsgemäßen Magnet-Baugruppe 10' in perspektivischer Darstellung, wobei diese Magnet-Baugruppe 10' sich lediglich in der Ausgestaltung der Ausnehmung 12B' von der zuvor beschriebenen Magnet-Baugruppe 10 unterscheidet und statt einer von der zweiten Stirnseite S2 in axialer Richtung in das Magnetelement 12' eingebrachten U-förmigen Aussparung 12B zwei, sich in axialer Richtung A2 weg vom Anschlagflansch 11C sowie in radialer Richtung nach außen und in Umfangsrichtung erstreckende Vorsprünge 16-1 und 16-2 aufweist, welche zusammen mit einem Stirnflächenabschnitt, der die erste Innenfläche der Ausnehmung 12B' bildet, die Ausnehmung 12B' definieren, in welche das Rastmittel 11D eingreift. Die zweite Innenfläche I2, welche als Anschlagfläche in der ersten Umfangsrichtung U1 dient, wird dabei durch den Vorsprung 16-1 gebildet und die dritte Innenfläche I3, welche als Anschlagfläche in der zweiten Umfangsrichtung U2 dient, durch den zweiten Vorsprung 16-2.

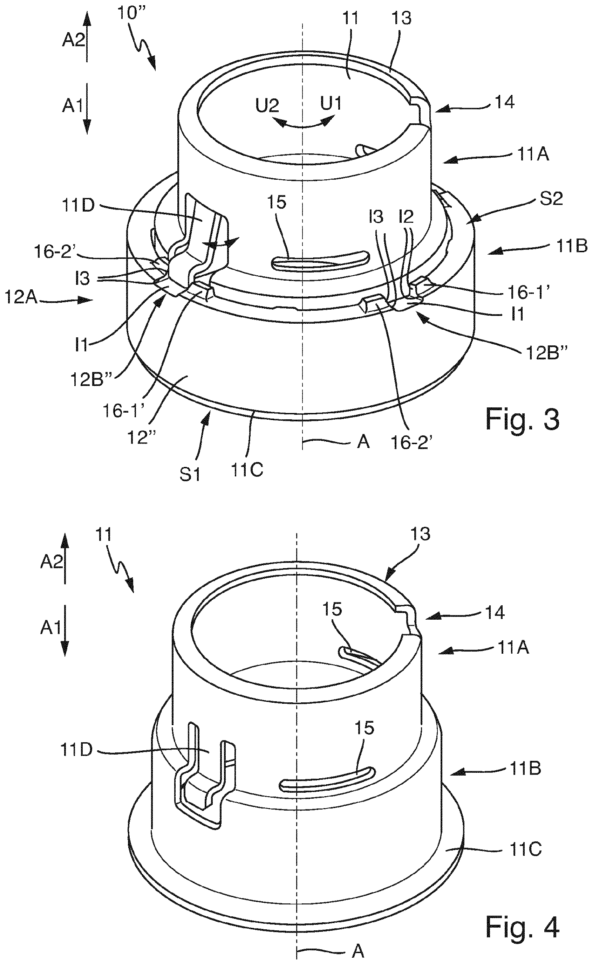

**Fig.** 3 zeigt ein drittes Ausführungsbeispiel einer erfindungsgemäßen Magnet-Baugruppe 10" in perspektivischer Darstellung, wobei diese Magnet-Baugruppe 10" sich unter anderem in der Ausgestaltung der Ausnehmung 12B" von der zuvor beschriebenen Magnet-Baugruppen 10 und 10' unterscheidet und eine sowohl von der zweiten Stirnseite S2 in axialer Richtung in das Magnetelement 12' eingebrachte U-förmigen Aussparung 12B sowie zwei, sich in axialer Richtung A2 weg vom Anschlagflansch 11C sowie in radialer Richtung nach außen und in Umfangsrichtung erstreckende Vorsprünge 16-1' und 16-2' aufweist, wobei die Aussparung 12B und die Vorsprünge 16-1, 16-2 gemeinsam die Ausnehmung 12B" definieren.

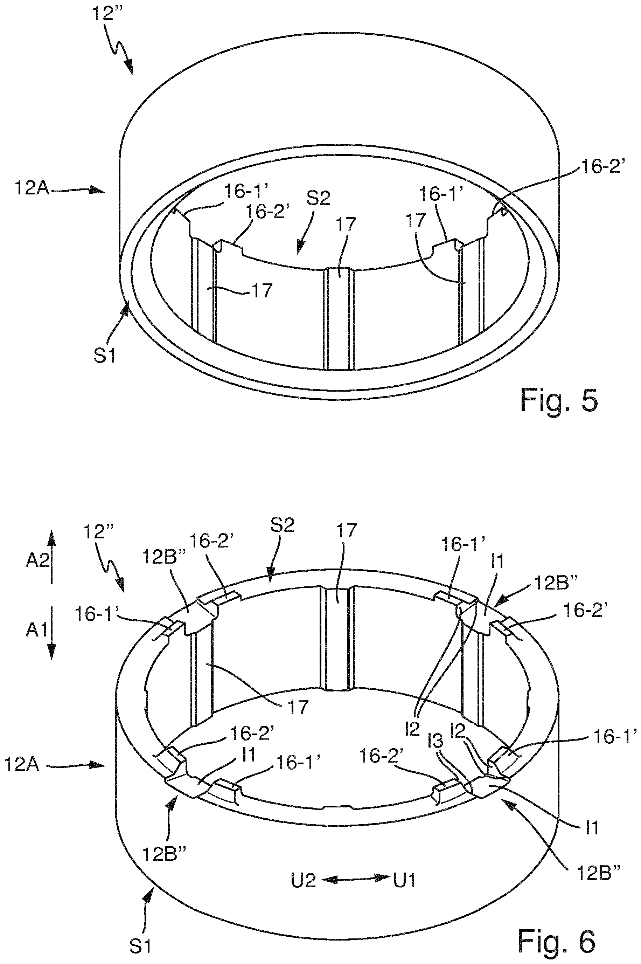

Darüber hinaus weist das Magnetelement 12" in diesem Fall an seiner inneren Mantelfläche mehrere, in Umfangsrichtung verteilt und beabstandet zueinander angeordnete und jeweils in axialer Richtung verlaufende Rippen 17 auf, wobei die Rippen 17 sich insbesondere über die gesamte Länge des Magnetelements 12" in axialer Richtung A1, A2 erstrecken, siehe Fig. 5 und 6. Mithilfe dieser Rippen 17 lässt sich auf besonders einfache Art und Weise eine gute Zentrierung und koaxiale Anordnung des Magnetelements 12" zur Hülse 11 erreichen und damit auf einfache Art und Weise eine exakte Positionierung und Ausrichtung des Magnetelementes 12", welche für die Sensorsignalqualität von wesentlicher Bedeutung ist.

Sämtliche der in den Fig. 1 bis 3 dargestellten und anhand dieser beschriebenen Ausführungsbeispiele einer erfindungsgemäßen Magnet-Baugruppe 10, 10' und 10" weisen jeweils einen am vom Anschlagflansch 11C abgewandten Ende der Hülse 11 einen sich in radialer Richtung nach innen erstreckenden Positionierungsflansch 13 für eine einfache und präzise Positionierung der Hülse 11 bzw. der Magnet-Baugruppe 10, 10', 10" auf einer zugehörigen, nicht dargestellten Lenkwelle auf, wobei der Positionierungsflansch 13 dabei zur Anlage an einer entsprechend ausgebildeten Wellenschulter bzw. einem entsprechend ausgebildeten Wellenabsatz der zugehörigen Lenkwelle ausgebildet ist. In einer alternativen Ausgestaltung einer erfindungsgemäßen Magnet-Baugruppe kann dieser Positionierungsflansch 13 entfallen.

Für eine einfache und präzise Ausrichtung einer erfindungsgemäßen Magnet-Baugruppe 10, 10', 10" ist bei den in den Fig. 1 bis 3 dargestellten und anhand diesen beschriebenen Ausführungsbeispielen von erfindungsgemäßen Magnet-Baugruppen 10, 10' und 10" ferner jeweils in der Hülse 11 im Bereich des Positionierungsflansches 13 eine Ausnehmung 14 vorgesehen. Diese dient insbesondere als Werkzeugeingriffsöffnung 14, in welche ein Werkzeug, beispielsweise ein Schraubendreher oder dergleichen eingeführt werden kann, für ein einfacheres Verdrehen und Ausrichten der Hülse 11 bzw. der Magnet-Baugruppe 10, 10', 10" in Umfangsrichtung U1, U2 relativ zur Welle, um die Hülse 11 bzw. die Magnet-Baugruppe 10, 10', 10" mit dem Magnetelement 12, 12', 12" vor dem (drehfesten) Befestigen auf der Welle in Umfangsrichtung U1, U2 auszurichten. In einer alternativen Ausgestaltung einer erfindungsgemäßen Magnet-Baugruppe kann diese Ausnehmung 14 entfallen.

Ferner weisen sämtliche der in den Fig. 1 bis 3 dargestellten und beschriebenen Ausführungsbeispiele einer erfindungsgemäßen Magnet-Baugruppe 10, 10' und 10" jeweils mehrere, bei den gezeigten Ausführungsbeispielen jeweils genau drei, in Umfangsrichtung U1, U2 verteilt, insbesondere gleichmäßig verteilt, und beabstandet zueinander angeordnete Querschlitze 15 auf, welche sich im Wesentlichen in Umfangsrichtung U1, U2 erstrecken und als Entlastungsschlitze 15 beim Befestigen der Hülse 11 auf der Lenkwelle dienen, insbesondere, wenn die Hülse 11 durch Verstemmen bzw. Crimpen mit Hilfe entsprechender Verstemmstifte bzw. Crimpstifte auf der Welle befestigt wird. In einer alternativen Ausgestaltung einer erfindungsgemäßen Magnet-Baugruppe können diese Entlastungsschlitze 15 entfallen.

Bei den in den Fig. 1 bis 3 dargestellten und anhand dieser beschriebenen Ausführungsbeispielen einer erfindungsgemäßen Magnet-Baugruppe 10, 10' und 10" ist die Hülse 11 jeweils gekröpft ausgebildet und mit unterschiedlichen Durchmessern von Befestigungsabschnitt 11A und Verbindungsabschnitt 11B. Diese Ausgestaltung stellt ebenfalls eine vorteilhafte Ausgestaltung dar. Die Hülse einer erfindungsgemäßen Magnet-Baugruppe kann auch im Befestigungsabschnitt den gleichen Durchmesser (Innen- und/oder Außendurchmesser) aufweisen wie im Verbindungsabschnitt und insbesondere zylindrisch ausgebildet sein über beide Abschnitte hinweg, insbesondere über ihre gesamte Länge.

Alternativ ist ferner eine Magnet-Baugruppe denkbar, welche ein mit dem Magnetelement verbundenes oder integral ausgebildetes Rastmittel aufweist, vorzugsweise ebenfalls einen Rastarm mit einem freien Ende, und eine Hülse mit einer entsprechenden Ausnehmung.

In diesem Fall erstreckt sich das Rastmittel besonders bevorzugt im Wesentlichen in der zweiten axialen Richtung vom Anschlagflansch 11C weg und die Ausnehmung ist insbesondere in Richtung des Anschlagflansches 11C geöffnet, wobei in diesem Fall ein "Einrasten" des Rastmittels in der Ausnehmung entgegen den beschriebenen Ausführungsbeispielen vorzugsweise durch ein "nach innen Drücken" des Rastmittels bewirkt wird und ein Lösen der formschlüssigen Verbindung insbesondere durch ein "nach außen Drücken" des Rastmittels.

In diesem Fall kann es vorteilhaft sein, wenn das Magnetelement ein Mehrkomponenten-Bauteil ist, insbesondere ein im Mehrkomponenten-Spritzgussverfahren hergestelltes Bauteil, mit beispielsweise einem Rastmittel aus einem Werkstoff, der nachgiebiger ist als ein für den magnetisch wirksamen Abschnitt verwendeter Werkstoff.

Fig. 4 zeigt die Hülse 11 der erfindungsgemäßen Magnet-Baugruppen aus den Fig. 1 bis 4 als Einzelteil in perspektivischer Darstellung, wobei in dieser Darstellung gut die Ausgestaltung des Anschlagflansches 11C sowie des Rastarmes 11D erkennbar ist. Insbesondere ist anhand dieser Darstellung erkennbar, dass der Anschlagflansch 11C in vorteilhafter Weise vollständig umlaufend ausgebildet ist, was sich insbesondere vorteilhaft auf die Steifigkeit des Anschlagflansches 11C in axialer Richtung auswirkt und damit auch auf die in axialer Richtung über den Anschlagflansch 11C abstützbaren Kräfte.

Fig. 5 und 6 zeigen das Magnetelement 12" der erfindungsgemäßen Magnet-Baugruppe 10" aus Fig. 3 als Einzelteil in verschiedenen perspektivischen Darstellungen, wobei in dieser Darstellung die weiter oben im Zusammenhang mit Fig, 3 bereits erwähnten, an der Innenseite des Magnetelements 12" angeordneten und in axialer Richtung A1, A2 sich über die gesamte Länge des Magnetelements 12" erstreckenden Rippen 17 für eine verbesserte Zentrierung relativ zur Hülse 11 gut zu erkennen sind.

Selbstverständlich ist Vielzahl konstruktiver Abwandlungen zu dem erläuterten Ausführungsbeispiel möglich, ohne den Inhalt der Patentansprüche zu verlassen.

### Bezuaszeichenliste:

- 10, 10', 10": erfindungsgemäße Magnet-Baugruppe
- 11: Hülse
- 11A: buchsenförmiger Befestigungsabschnitt
- 11B: buchsenförmiger Verbindungsabschnitt
- 11C: Anschlagflansch
- 11D: Rastmittel
- 12, 12', 12": Magnetelement
- 12A: wirksamer Magnetabschnitt
- 12B, 12B', 12B": Ausnehmung für formschlüssige Verbindung mit Hülse
- 13: Positionierungsflansch
- 14: Werkzeugeingriffsausnehmung
- 15: Querschlitz
- 16-1, 16-1', 16-1": Vorsprung mit in erster Umfangsrichtung wirkender Anschlagfläche
- 16-2, 16-2', 16-2": Vorsprung mit in zweiter Umfangsrichtung wirkender Anschlagfläche
- 17: Rippe

- A: Rotationsachse
- A1: erste axiale Richtung
- A2: zweite axiale Richtung
- I1: erste Innenfläche
- I2: zweite Innenfläche
- I3: dritte Innenfläche
- S1: erste Stirnseite
- S2: zweite Stirnseite
- U1: erste Umfangsrichtung
- U2: zweite Umfangsrichtung

## Patentansprüche

1. Magnet-Baugruppe (10, 10', 10") für eine Sensoreinrichtung zum Erfassen einer einen Rotationszustand einer Lenkwelle eines Kraftfahrzeugs charakterisierenden Messgröße,
- wobei die Magnet-Baugruppe (10, 10', 10") eine Hülse (11) sowie ein mit der Hülse (11) formschlüssig verbundenes Magnetelement (12, 12', 12") aufweist,
- wobei die Hülse (11) zum Verbinden der Magnet-Baugruppe (10, 10', 10") mit einem ersten Teil der Lenkwelle ausgebildet ist und wenigstens einen sich in einer Radialebene in radialer Richtung nach außen erstreckenden Anschlagflansch (11C) zur axialen Sicherung des Magnetelements (12, 12', 12") in einer ersten axialen Richtung (A1) aufweist,
- wobei das Magnetelement (12, 12', 12") hülsen- oder ringförmig ausgebildet ist oder ein Magnetring oder eine Magnethülse ist und eine erste Stirnseite (S1), eine zweite Stirnseite (S2) und einen magnetisch wirksamen Magnetabschnitt (12A) dazwischen aufweist, und
- wobei das Magnetelement (12, 12', 12") konzentrisch zur Hülse (11) angeordnet ist und mit seiner ersten Stirnseite (S1) zumindest teilweise axial am Anschlagflansch (11c) abgestützt ist und dadurch in der ersten axialen Richtung (A1) gesichert ist,
wobei das Magnetelement (12, 12', 12") mittels wenigstens eines, in eine in axialer Richtung geöffnete Ausnehmung (12B, 12B', 12B") mit mehreren Innenflächen (I1, I2, I3) eingreifenden Rastmittels (11D) in einer zweiten axialen Richtung (A2) sowie in einer ersten Umfangsrichtung (U1) und in einer zweiten Umfangsrichtung (U2) gesichert ist, wobei eine erste Innenfläche (I1) der Ausnehmung (12B, 12B', 12B") eine Anschlagfläche in der zweiten axialen Richtung (A2) bildet und das Rastmittel (11D) in der zweiten axialen Richtung (A2) sichert, wobei eine zweite Innenfläche (I2) der Ausnehmung (12B, 12B', 12B") eine Anschlagfläche in der ersten Umfangsrichtung (U1) bildet und das Rastmittel (11D) in der ersten Umfangsrichtung (U1) sichert und eine dritte Innenfläche (I3) der Ausnehmung (12B, 12B', 12B") eine Anschlagfläche in der zweiten Umfangsrichtung (U2) bildet und das Rastmittel (11D) in der zweiten Umfangsrichtung (U2) sichert.

2. Magnet-Baugruppe (10, 10', 10") nach Anspruch 1, **dadurch gekennzeichnet, dass** der Anschlagflansch (11C) vollständig umlaufend ausgebildet ist.

3. Magnet-Baugruppe (10) nach Anspruch 1 oder 2, **dadurch gekennzeichnet, dass** die wenigstens eine Ausnehmung (12B) eine an der zweiten Stirnseite (S2) des Magnetelements (12) angeordnete und sich ausgehend von einer Stirnfläche der zweiten Stirnseite (S2) in Richtung der ersten Stirnseite (S1) in axialer Richtung (A1) und in Umfangsrichtung (U1, U2) erstreckende, in das Magnetelement (12) eingebrachte Vertiefung oder Aussparung ist.

4. Magnet-Baugruppe (10') nach Anspruch 1 oder 2, **dadurch gekennzeichnet, dass** die wenigstens eine Ausnehmung (12B') durch einen Stirnflächenabschnitt (I2) der zweiten Stirnseite (S2) des Magnetelements (12') und durch zwei jeweils in Umfangsrichtung (U1, U2) außen an diesen Stirnflächenabschnitt angrenzende und sich jeweils in axialer Richtung (A2) weg von der Stirnfläche an der zweiten Stirnseite (S2) erstreckende Vorsprünge (16-1, 16-2) des Magnetelements (12') gebildet ist.

5. Magnet-Baugruppe (10") nach einem der vorgenannten Ansprüche 1 bis 4, **dadurch gekennzeichnet, dass** die wenigstens eine Ausnehmung (12B") durch eine an der zweiten Stirnseite (S2) des Magnetelements, ausgehend von einer Stirnfläche der zweiten Stirnseite (S2) in Richtung der ersten Stirnseite (S1) in axialer Richtung (A1) und Umfangsrichtung (U1, U2) in das Magnetelement (12") eingebrachte Vertiefung oder Aussparung sowie durch zwei, jeweils in Umfangsrichtung (U1, U2) außen an die Vertiefung oder Aussparung angrenzende und sich jeweils in axialer Richtung weg (A2) von der zweiten Stirnseite (S2) erstreckende Vorsprünge (16-1', 16-2') des Magnetelements (12") gebildet ist.

6. Magnet-Baugruppe (10, 10', 10") nach einem der vorgenannten Ansprüche 1 bis 5, **dadurch gekennzeichnet, dass** das Rastmittel (11D) einen sich zumindest teilweise in axialer Richtung (A1, A2) erstreckenden Rastarm (11D) mit einem freien Ende aufweist oder durch einen solchen Rastarm (11D) gebildet ist, wobei der Rastarm mit seinem freien Ende in die zugehörige Ausnehmung (12B, 12B', 12B") eingreift und dadurch das Magnetelement (12, 12', 12") in der zweiten axialen Richtung (A2) sowie in der ersten Umfangsrichtung (U1) und der zweiten Umfangsrichtung (U2) jeweils sichert, insbesondere jeweils formschlüssig.

7. Magnet-Baugruppe (10, 10', 10") nach Anspruch 6, **dadurch gekennzeichnet, dass** das Rastmittel (11D) mit der Hülse (11) verbunden ist, wobei das Rastmittel (11D) insbesondere integral mit der Hülse (11) ausgebildet ist oder mit der Hülse (11) ein gemeinsames Bauteil bildet.

8. Magnet-Baugruppe (10, 10', 10") nach Anspruch 7, **dadurch gekennzeichnet, dass** das Rastmittel (11D) insbesondere ein an der Hülse (11) befestigter oder integral oder einteilig mit der Hülse (11) ausgebildeter Rastarm (11D) mit einem freien Ende ist, der sich im Wesentlichen in axialer Richtung (A1, A2) und zumindest teilweise in radialer Richtung nach außen und mit seinem freien Ende in Richtung der zweiten Stirnseite (S2) des Magnetelementes (12, 12', 12") erstreckt.

9. Magnet-Baugruppe (10, 10', 10") nach Anspruch 8, **dadurch gekennzeichnet, dass** die Hülse (11) Metall aufweist oder daraus besteht und der Rastarm (11D) durch teilweises Heraustrennen, insbesondere teilweises Ausstanzen, eine Lasche aus der Hülse (11), insbesondere im Bereich des Befestigungsabschnitts (11A), und anschließendes Umformen der Lasche, insbesondere durch Biegen der Lasche, hergestellt ist.

10. Magnet-Baugruppe (10, 10', 10") nach einem der vorgenannten Ansprüche 1 bis 9, **dadurch gekennzeichnet, dass** das Magnetelement (12, 12', 12") an seiner inneren Mantelfläche mehrere, in Umfangsrichtung verteilt und beabstandet zueinander angeordnete und jeweils in axialer Richtung verlaufende Rippen (17) aufweist, wobei die Rippen (17) sich insbesondere über die gesamte Länge des Magnetelements (12, 12', 12") in axialer Richtung (A1, A2) erstrecken.

11. Sensoreinrichtung zum Erfassen einer einen Rotationszustand einer Lenkwelle eines Kraftfahrzeugs charakterisierenden Messgröße, **dadurch gekennzeichnet, dass** die Sensoreinrichtung eine Magnet-Baugruppe (10, 10', 10") nach einem der Ansprüche 1 bis 10 aufweist.

12. Kraftfahrzeug mit einer Sensoreinrichtung, **dadurch gekennzeichnet, dass** die Sensoreinrichtung nach Anspruch 11 ausgebildet ist.

## Claims

1. Magnet assembly (10, 10', 10") for a sensor device for detecting a measurement variable characterizing a rotation state of a steering shaft of a motor vehicle,
- wherein the magnet assembly (10, 10', 10") has a sleeve (11) and a magnetic element (12, 12', 12"), which is connected in a form-fitting manner to the sleeve (11),
- wherein the sleeve (11) is designed for connecting the magnet assembly (10, 10', 10") to a first part of the steering shaft and has at least one stop flange (11C), which extends outwards in the radial direction in a radial plane, for axially securing the magnetic element (12, 12', 12") in a first axial direction (A1),
- wherein the magnetic element (12, 12', 12") is of sleeve-shaped or annular design or is a magnetic ring or a magnetic sleeve and has a first end side (S1), a second end side (S2) and a magnetically effective magnetic portion (12A) in between, and
- wherein the magnetic element (12, 12', 12") is arranged concentrically with respect to the sleeve (11) and, with its first end side (S1), is at least partially supported axially on the stop flange (11c) and is thereby secured in the first axial direction (A1),
wherein the magnetic element (12, 12', 12") is secured in a second axial direction (A2) and in a first circumferential direction (U1) and in a second circumferential direction (U2) by means of at least one latching means (11D) engaging in a recess (12B, 12B', 12B") which is open in the axial direction and has a plurality of inner surfaces (I1, 12, 13), wherein a first inner surface (I1) of the recess (12B, 12B', 12B") forms a stop surface in the second axial direction (A2) and secures the latching means (11D) in the second axial direction (A2), wherein a second inner surface (12) of the recess (12B, 12B', 12B") forms a stop surface in the first circumferential direction (U1) and secures the latching means (11D) in the first circumferential direction (U1), and a third inner surface (13) of the recess (12B, 12B', 12B") forms a stop surface in the second circumferential direction (U2) and secures the latching means (11D) in the second circumferential direction (U2).

2. Magnet assembly (10, 10', 10") according to Claim 1, **characterized in that** the stop flange (11C) is formed in a completely encircling manner.

3. Magnet assembly (10) according to Claim 1 or 2, **characterized in that** the at least one recess (12B) is a depression or clearance which is arranged on the second end side (S2) of the magnetic element (12) and extends from an end surface of the second end side (S2) in the direction of the first end side (S1) in the axial direction (A1) and in the circumferential direction (U1, U2) and is introduced into the magnetic element (12).

4. Magnet assembly (10') according to Claim 1 or 2, **characterized in that** the at least one recess (12B') is formed by an end surface portion (12) of the second end side (S2) of the magnetic element (12') and by two projections (16-1, 16-2) of the magnetic element (12'), said projections bordering said end surface portion on the outside in each case in the circumferential direction (U1, U2) and extending in each case in the axial direction (A2) away from the end surface on the second end side (S2).

5. Magnet assembly (10") according to one of the preceding Claims 1 to 4, **characterized in that** the at least one recess (12B") is formed by a depression or clearance introduced into the magnetic element (12") on the second end side (S2) of the magnetic element, from an end surface of the second end side (S2) in the direction of the first end side (S1) in the axial direction (A1) and circumferential direction (U1, U2) and by two projections (16-1', 16-2') of the magnetic element (12''), said projections bordering the depression or clearance on the outside in each case in the circumferential direction (U1, U2) and extending in each case in the axial direction (A2) away from the second end side (S2).

6. Magnet assembly (10, 10', 10") according to one of the preceding Claims 1 to 5, **characterized in that** the latching means (11D) has a latching arm (11D), which extends at least partially in the axial direction (A1, A2) and has a free end, or is formed by such a latching arm (11D), wherein the latching arm engages with its free end in the associated recess (12B, 12B', 12B") and thereby in each case secures the magnetic element (12, 12', 12") in the second axial direction (A2) and in the first circumferential direction (U1) and the second circumferential direction (U2), in particular in each case in a form-fitting manner.

7. Magnet assembly (10, 10', 10") according to Claim 6, **characterized in that** the latching means (11D) is connected to the sleeve (11), wherein the latching means (11D) is formed in particular integrally with the sleeve (11) or forms a common component with the sleeve (11).

8. Magnet assembly (10, 10', 10") according to Claim 7, **characterized in that** the latching means (11D) is in particular a latching arm (11D), which is fastened to the sleeve (11) or is formed integrally or in one part with the sleeve (11) and has a free end and which extends outwards substantially in the axial direction (A1, A2) and at least partially in the radial direction and, with its free end, in the direction of the second end side (S2) of the magnetic element (12, 12', 12").

9. Magnet assembly (10, 10', 10") according to Claim 8, **characterized in that** the sleeve (11) comprises metal or is composed thereof, and the latching arm (11D) is produced by partial severing, in particular partial punching, of a tab out of the sleeve (11), in particular in the region of the fastening portion (11A), and subsequent forming of the tab, in particular by bending of the tab.

10. Magnet assembly (10, 10', 10") according to one of the preceding Claims 1 to 9, **characterized in that** the magnetic element (12, 12', 12") has, on its inner circumferential surface, a plurality of ribs (17) which are arranged distributed and spaced apart from one another in the circumferential direction and run in each case in the axial direction, wherein the ribs (17) extend in particular over the entire length of the magnetic element (12, 12', 12") in the axial direction (A1, A2).

11. Sensor device for detecting a measurement variable characterizing a rotation state of a steering shaft of a motor vehicle, **characterized in that** the sensor device has a magnet assembly (10, 10', 10") according to one of Claims 1 to 10.

12. Motor vehicle with a sensor device, **characterized in that** the sensor device is designed according to Claim 11.

## Revendications

1. Ensemble d'aimant (10, 10', 10") pour un dispositif capteur servant à détecter une grandeur de mesure caractérisant un état de rotation d'un arbre de direction d'un véhicule automobile,
- l'ensemble d'aimant (10, 10', 10") présentant une douille (11) ainsi qu'un élément magnétique (12, 12', 12") relié à la douille (11) par complémentarité de forme,
- la douille (11) étant réalisée pour relier l'ensemble d'aimant (10, 10', 10") à une première partie de l'arbre de direction, et présentant au moins une bride de butée (11C) s'étendant vers l'extérieur dans un plan radial dans la direction radiale pour un blocage axial de l'élément magnétique (12, 12', 12") dans une première direction axiale (A1),
- l'élément magnétique (12, 12', 12") étant réalisé en forme de douille ou d'anneau ou étant un anneau magnétique ou une douille magnétique, et présentant un premier côté frontal (S1), un deuxième côté frontal (S2) et une partie d'aimant (12A) à effet magnétique entre les deux, et
- l'élément magnétique (12, 12', 12") étant disposé de manière concentrique par rapport à la douille (11), et étant en appui par son premier côté frontal (S1) au moins en partie axialement sur la bride de butée (11c), et étant ainsi bloqué dans la première direction axiale (A1),
l'élément magnétique (12, 12', 12") étant bloqué à l'aide d'au moins un moyen d'arrêt (11D), venant en prise dans un évidement (12B, 12B', 12B") ouvert dans une direction axiale et doté de plusieurs faces intérieures (I1, I2, I3), dans une deuxième direction axiale (A2) ainsi que dans une première direction circonférentielle (U1) et dans une deuxième direction circonférentielle (U2), une première surface intérieure (I1) de l'évidement (12B, 12B', 12B") constituant une surface de butée dans la deuxième direction axiale (A2) et bloquant le moyen d'arrêt (11D) dans la deuxième direction axiale (A2), une deuxième surface intérieure (I2) de l'évidement (12B, 12B', 12B") constituant une surface de butée dans la première direction circonférentielle (U1) et bloquant le moyen d'arrêt (11D) dans la première direction circonférentielle (U1), et une troisième surface intérieure (I3) de l'évidement (12B, 12B', 12B") constituant une surface de butée dans la deuxième direction circonférentielle (U2) et bloquant le moyen d'arrêt (11D) dans la deuxième direction circonférentielle (U2).

2. Ensemble d'aimant (10, 10', 10") selon la revendication 1, **caractérisé en ce que** la bride de butée (11C) est réalisée de manière entièrement périphérique.

3. Ensemble d'aimant (10) selon la revendication 1 ou 2, **caractérisé en ce que** ledit au moins un évidement (12B) est un creux ou un dégagement disposé sur le deuxième côté frontal (S2) de l'élément magnétique (12) et s'étendant en partant d'une face frontale du deuxième côté frontal (S2) en direction du premier côté frontal (S1) dans la direction axiale (A1) et dans la direction circonférentielle (U1, U2), pratiqué dans l'élément magnétique (12).

4. Ensemble d'aimant (10') selon la revendication 1 ou 2, **caractérisé en ce que** ledit au moins un évidement (12B') est formé par une partie de face frontale (I2) du deuxième côté frontal (S2) de l'élément magnétique (12') et par deux saillies (16-1, 16-2) de l'élément magnétique (12'), respectivement adjacentes dans la direction circonférentielle (U1, U2) à l'extérieur à cette partie de face frontale et s'éloignant respectivement dans la direction axiale (A2) de la face frontale sur le deuxième côté frontal (S2).

5. Ensemble d'aimant (10") selon l'une quelconque des revendications précédentes 1 à 4, **caractérisé en ce que** ledit au moins un évidement (12B") est formé par un creux ou un dégagement pratiqué dans l'élément magnétique (12") sur le deuxième côté frontal (S2) de l'élément magnétique, en partant d'une surface frontale du deuxième côté frontal (S2) en direction du premier côté frontal (S1) dans la direction axiale (A1) et la direction circonférentielle (U1, U2), ainsi que par deux saillies (16-1', 16-2') de l'élément magnétique (12") respectivement adjacentes dans la direction circonférentielle (U1, U2) à l'extérieur au creux ou au dégagement et s'éloignant respectivement du deuxième côté frontal (S2) dans la direction axiale (A2).

6. Ensemble d'aimant (10, 10', 10") selon l'une quelconque des revendications précédentes 1 à 5, **caractérisé en ce que** le moyen d'arrêt (11D) présente un bras d'arrêt (11D) doté d'une extrémité libre et s'étendant au moins en partie dans la direction axiale (A1, A2) ou est formé par un tel bras d'arrêt (11D), le bras d'arrêt venant en prise par son extrémité libre dans l'évidement associé (12B, 12B', 12B") et bloquant ainsi respectivement l'élément magnétique (12, 12', 12") dans la deuxième direction axiale (A2) ainsi que dans la première direction circonférentielle (U1) et la deuxième direction circonférentielle (U2), en particulier respectivement par complémentarité de forme.

7. Ensemble d'aimant (10, 10', 10") selon la revendication 6, **caractérisé en ce que** le moyen d'arrêt (11D) est relié à la douille (11), le moyen d'arrêt (11D) étant réalisé en particulier de manière intégrale avec la douille (11) ou formant avec la douille (11) un composant commun.

8. Ensemble d'aimant (10, 10', 10") selon la revendication 7, **caractérisé en ce que** le moyen d'arrêt (11D) est en particulier un bras d'arrêt (11D) doté d'une extrémité libre et fixé à la douille (11) ou réalisé de manière intégrale ou d'un seul tenant avec la douille (11), qui s'étend substantiellement dans la direction axiale (A1, A2) et au moins en partie dans la direction radiale vers l'extérieur et par son extrémité libre en direction du deuxième côté frontal (S2) de l'élément magnétique (12, 12', 12").

9. Ensemble d'aimant (10, 10', 10") selon la revendication 8, **caractérisé en ce que** la douille (11) présente du métal ou est composé de métal, et le bras d'arrêt (11D) est fabriqué par séparation partielle, en particulier par découpe partielle, d'une patte de la douille (11), en particulier au niveau de la partie de fixation (11A), et par formage consécutif de la patte, en particulier par cintrage de la patte.

10. Ensemble d'aimant (10, 10', 10") selon l'une quelconque des revendications précédentes 1 à 9, **caractérisé en ce que** l'élément magnétique (12, 12', 12") présente au niveau de sa surface latérale intérieure plusieurs nervures (17) disposées de manière répartie dans la direction circonférentielle et de manière espacée les unes par rapport aux autres et s'étendant respectivement dans la direction axiale, les nervures (17) s'étendant en particulier sur toute la longueur de l'élément magnétique (12, 12', 12") dans la direction axiale (A1, A2).

11. Dispositif capteur servant à détecter une grandeur de mesure caractérisant un état de rotation d'un arbre de direction d'un véhicule automobile, **caractérisé en ce que** le dispositif capteur présente un ensemble d'aimant (10, 10', 10") selon l'une quelconque des revendications 1 à 10.

12. Véhicule automobile comprenant un dispositif capteur, **caractérisé en ce que** le dispositif capteur est réalisé selon la revendication 11.
